# EUROPEAN PATENT SPECIFICATION

(11) **EP 2 789 223 B1**
(45) Date of publication and mention of the grant of the patent: **06.03.2019**
(21) Application number: 13425050.5
(22) Date of filing: 08.04.2013
(51) Int. Cl.: A01D 57/20, A01D 84/00

(54) **Assembly for the movement and transport of agricultural products**
Anordnung zum Bewegen und Transportieren von landwirtschaftlichen Produkten
Ensemble pour le déplacement et le transport de produits agricoles

(43) Date of publication of application: 15.10.2014
(73) Proprietor: I.G. S.R.L., 48026 Russi (RA) (IT)
(72) Inventor: Callegati Gallignani, Augusto, 48026 Russi (RA) (IT)
(74) Representative: Modiano, Micaela Nadia

(56) References cited:
- DE-A1- 19 645 629
- US-A1- 2004 200 203
- US-A1- 2005 126 153
- US-B1- 6 205 757
- US-B1- 7 047 714

## Description

The present invention relates to an assembly for the movement and transport of agricultural products.

As is known, in fields and on lands for agricultural use it is frequently necessary to cut or mow grass or other plants, which are then destined for subsequent treatments and uses.

For example, and as an alternative to haymaking, for animal feed in cold countries it is very common to use silage, i.e. the product of a technique of conservation of grass and forage in general (called ensilage), which involves, after cutting, the packaging and banding of such agricultural products, in order to ensure their anaerobic fermentation which is initiated by specific inoculants.

In order to implement the method described above, it thus becomes necessary to collect the grass, which has previously been cut and left more or less uniformly distributed over the ground of interest.

To this end, use is normally made of adapted devices, which make it possible to amass the entire mass of cut grass (or a different cut agricultural product) in parallel rows (also known as "windrows"), so as to facilitate the task of the agricultural machines subsequently employed for packaging and banding (which must thus be limited to moving along the ground following the ideal path formed by the windrows, in order to collect in a practical and easy manner everything that was cut previously).

The devices described above, which are known as "windrowers" or "side-delivery rakes", are thus specific devices, driven by a drive unit and provided, in some implementation solutions, with teeth provided with a rotatory motion sweeping the ground, in order to shift the cut grass transversely with respect to the advancement direction, thus collecting it and piling it along the aforementioned windrows.

Such implementation solutions are not however devoid of drawbacks: the entrainment of the grass on the ground in fact leads to a kind of "maltreatment" thereof, the loss of a part thereof along the ground, and the simultaneous shifting of soil and other impurities, which are thus mixed in with the silage, leading to a decrease of its quality.

Thus other implementation solutions are known, which at least partially solve the above problems: they involve in fact the use of teeth that pick up the product, and then deposit it on two or more rearward belts (which are mutually aligned), which can move along a transverse direction, in order to amass the cut grass at the sides of the apparatus, thus forming the windrows.

Such solutions are also however beset by numerous problems: first and foremost, in fact, it must be noted that occasionally it is necessary to place the agricultural product (be it grass or a different plant), and thus the windrow being formed, along the ideal path of advancement of the drive unit. For such eventualities, some devices, of those mentioned above, make it possible to invert the direction of travel of the belts, which are conveniently mutually spaced apart, in order to let the product fall into the gap comprised between them, along the ideal axis of symmetry of the machine, which coincides with the path of advancement.

This however means that the product, while being collected along the desired direction, is mixed with the product that is already present there, which is not picked up because the teeth, which are mutually spaced as are the belts, are not able to collect it.

Although it is thus possible to form the windrow in the desired position, such windrow will be a mixture of grass that has been lifted and moved by the belts and other grass that has not undergone such treatment, thus resulting in a condition that is undesirable for operators and farmers, since the silage (or the hay) thus obtained is of a quality that is greatly inferior to that which can be obtained by moving the entire mass of cut grass.

Moreover, it can immediately be seen that the transverse encumbrance of the entire machine, which is made up of the drive unit and the device itself, which is provided with two belts that are laterally adjacent and mutually spaced, is decidedly large, and prevents the circulation thereof on roads, which is often necessary in order to allow the machines to be moved, possibly for several dozens of kilometers (along urban and suburban roads), in order to reach the fields where they are required.

Finally, it must be noted that often the above-mentioned devices are found to be rather unsuitable when used on terrain that is uneven or has irregularities of various origin, owing to the rigidity of the structure that distinguishes it.

US6205757 discloses a windrow merging machine comprising a main frame, first and second pickup mechanisms mounted on opposite sides of said main frame, first and second substantially axially aligned conveyors extending outwardly from opposite sides of said main frame proximate said first and second pickup mechanisms, respectively, inner and outer ends on said first and second conveyors, and said inner end of said first conveyor being elevated above said inner end of said second conveyor.

The aim of the present invention is to solve the above-mentioned problems, by providing an assembly that enables the movement of the entire mass of cut grass, or other agricultural product, and its transport along an ordered row, while being able to vary the placement of such row with respect to the advancement direction.

Within this aim, an object of the invention is to provide an assembly for the movement and transport of grass and other previously-cut agricultural products, which can be moved on urban or suburban roads.

A further object of the invention is to provide a versatile assembly for the movement and transport of grass and other previously-cut agricultural products, which is suitable for any type of terrain, even if it is irregular or uneven.

A further object of the invention is to provide a movement and transport assembly that ensures a high reliability of operation.

Another object of the invention is to provide a movement and transport assembly that can be easily implemented using elements and materials that are readily available on the market.

Another object of the invention is to provide a movement and transport assembly that is low-cost and safe in application.

In accordance with the invention, there is provided an assembly for the movement and transport of agricultural products, as defined in the appended claims.

Further characteristics and advantages of the invention will become more apparent from the description of two preferred, but not exclusive, embodiments of the movement and transport assembly according to the invention, illustrated by way of non-limiting example in the accompanying drawings wherein:
Figures 1 to 14 are schematic views of the assembly according to the invention, in the first embodiment, and more specifically:
   Figure 1 is a three-quarters perspective rear view, seen from above, schematically illustrating the assembly according to the invention in a first mutual arrangement of its components;
   Figure 2 is a three-quarters perspective front view, seen from above, of the assembly in the configuration in Figure 1;
   Figure 3 is a three-quarters perspective rear view, seen from below, of the assembly in the configuration in Figure 1;
   Figure 4 is a rear elevation view of the assembly in the configuration in Figure 1;
   Figure 5 is a view from above of the assembly in the configuration in Figure 1;
   Figure 6 is a greatly enlarged detail of the assembly according to the invention, in the first configuration, seen from below;
   Figure 7 is a lateral elevation view of the detail in Figure 6, minus a covering element;
   Figure 8 is a three-quarters perspective front view schematically illustrating the assembly according to the invention in a second mutual arrangement of its components;
   Figure 9 is a rear elevation view of the assembly in the configuration in Figure 7;
   Figure 10 is a view from above of the assembly in the configuration in Figure 7;
   Figure 11 is a greatly enlarged detail of the assembly according to the invention, in the second configuration, seen from below;
   Figure 12 is a right-hand, three-quarters perspective rear view, schematically illustrating the assembly according to the invention in a third mutual arrangement of its components;
   Figure 13 is a right-hand, three-quarters perspective rear view, schematically illustrating the assembly according to the invention in a fourth mutual arrangement of its components;
   Figure 14 is a rear elevation view of the assembly in the configuration in Figure 13;
Figures 15 to 18 are schematic views of some elements of the assembly according to the invention, in the second embodiment, and more specifically:

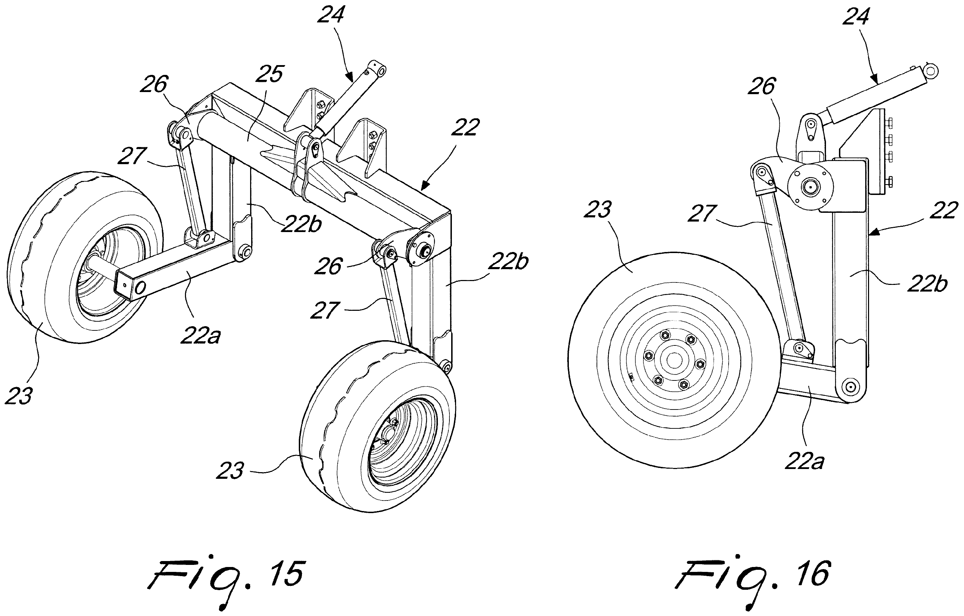

   Figure 15 is a three-quarters perspective rear view of some elements of the assembly according to the invention, in a first mutual arrangement;
   Figure 16 is a side view of the elements in Figure 15;

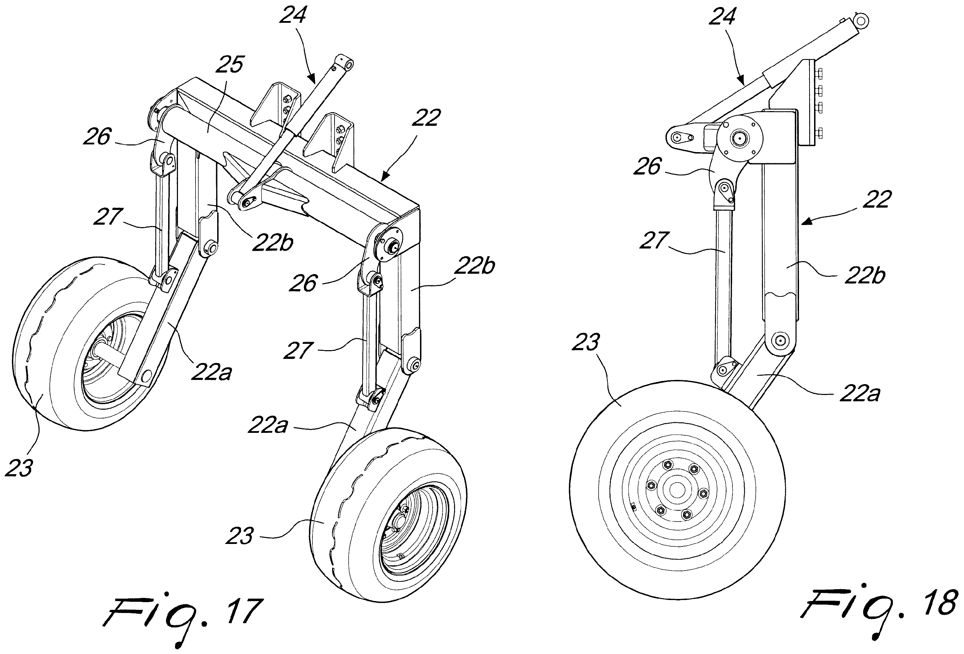

   Figure 17 is a three-quarters perspective rear view of some elements of the assembly according to the invention, in a second mutual arrangement;
   Figure 18 is a side view of the elements in Figure 17;

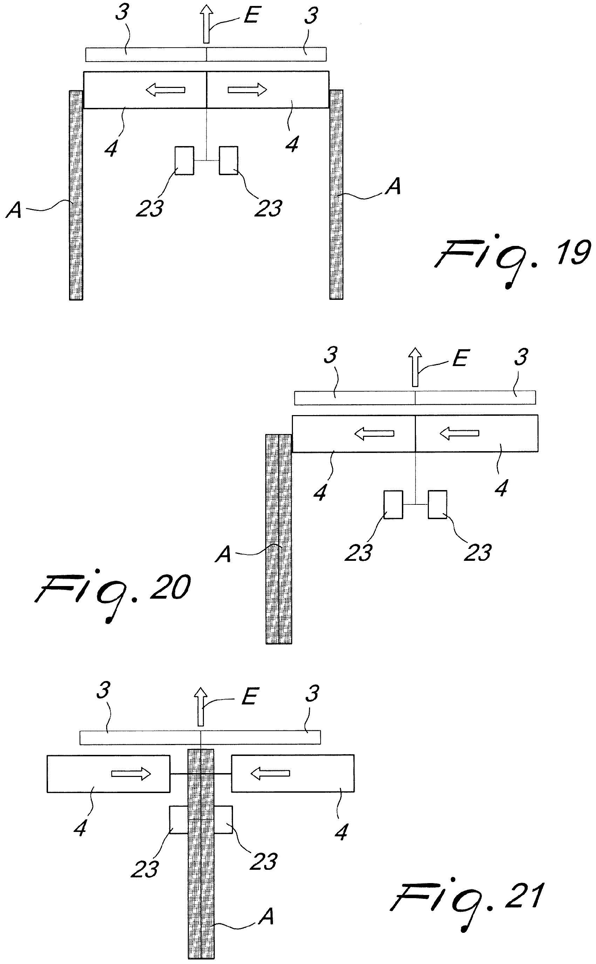

Figures 19 to 24 are schematic views from above of several uses of the assembly 1 according to the invention.

With particular reference to the figures, the reference numeral 1 generally designates an assembly for the movement and transport of agricultural products, such as grass, hay, forage, grain, maize, and the like, previously cut and distributed randomly, immediately after cutting, on a surface of the type of agricultural land and the like.

More precisely, in the preferred application the assembly 1 is intended to move and transport previously-cut grass, gathering it, according to the methods that will be explained below, along ordered rows (also known as "windrows" A), from where the grass can be subsequently taken, by other agricultural machines, as a function of the specific requirements and the treatments for which it is intended.

It should be emphasized that the possibility is not ruled out of also using the assembly 1 for different types of previously-cut agricultural products, according to specific requirements, while remaining within the scope of protection claimed herein.

The assembly 1 comprises a carriage 2 which can be coupled to a drive unit (a tractor or similar vehicle, for example), according to conventional methods, so that it can be entrained along the surface of interest: in the present discussion, a detailed description will be given of a possible embodiment of the carriage 2, while stating that the latter can be of any type, according to specific requirements, while remaining within the scope of protection claimed herein.

Associated with the carriage 2 are elements 3 for lifting and placing agricultural products on at least one conveyor belt 4, which faces and is proximate to the lifting and placing elements 3 and can move according to a predefined direction of operation B, which is substantially transverse to the axis of symmetry C of the carriage 2, so as to move and deposit the agricultural products in a predefined region D adjacent to one of the two margins of the belt 4, in the process forming, with the advancement of the drive unit and of the assembly 1, the windrows A.

As can be seen in the figures, the axis of symmetry C of the carriage 2 in fact coincides every moment with the path of advancement E of the assembly 1 entrained by the drive unit; therefore, the agricultural products picked up by the lifting and placing elements 3 are moved by the belt 4 (which, as noted, moves according to a predefined direction B which is transverse to the axis of symmetry C and therefore to the path of advancement E) and are deposited substantially at one of the two sides of the belt 4, where the windrow A is formed.

The belt 4 can vary the direction of sliding as desired, so that one is able to freely choose on which side, with respect to the belt 4, to form the windrow A.

The movement and transport assembly 1 comprises means of translational motion of the belt 4, with respect to the lifting and placing elements 3, along the predefined direction B, for the selective variation of the placement of the predefined region C for the deposit and accumulation of the entire mass of previously-cut agricultural products.

As will become more apparent below, the possibility of varying the position of the belt 4 with respect to the lifting and placing elements 3 in fact makes it possible to retrieve and move the entire mass of grass distributed on the ground, and intended to form the windrows A, whatever its relative position with respect to the assembly 1 which is advancing (and in particular if it is desired to obtain the formation of the windrow A substantially along the path of advancement E), thus preventing the windrows A from being composed partially of moved grass and partially of grass that has not been touched by the assembly 1, as occurs with the employment of conventional methods.

More specifically, the lifting and placing elements 3 comprise at least one row of rotating aligned teeth 5, parallel to the predefined direction of operation B, for the lifting of the previously-cut agricultural products and their delivery on the belt 4.

With further reference to the embodiment proposed in the accompanying figures, the teeth 5 can move in respective gaps defined between a plurality of spacers 6 (or plates, or straps).

The assembly 1 further comprises at least two conveyor belts 4, which are mutually opposite with respect to the axis of symmetry C (and are actuated by respective mutually independent motors 4a, which are preferably of the type of hydraulic motors 4a); thus, facing and proximate to each belt 4 is at least one respective row of rotating aligned teeth 5, parallel to the predefined direction of operation B, so as to allow the teeth 5 to pick up the grass (or other agricultural product) that the lifting and placing elements 3 progressively encounter during the advancement of the assembly 1 along the agricultural land, and in order to place it on the belts 4 (which are provided with a containment housing 4b, in order to collect the entire mass of grass picked up by the teeth 5, thus preventing it from going beyond the belts 4 and falling behind the machine).

In another embodiment, not according to the invention, the assembly 1 has a single belt 4, and a respective row of teeth 5 (for example, only those represented by continuous lines in the accompanying figures or only those schematically represented by dotted lines), which are substantially arranged at only one of the two sides of the carriage 2: by conveniently choosing the direction of travel of the belt 4 it is thus possible to form a windrow A arranged on one of the two margins of the belt 4.

In the embodiment according to the invention, thanks to the use of two belts 4 and two rows of teeth 5 (or even more, mutually parallel, rows for each belt 4), the assembly 1 is capable of collecting previously-cut grass from a wider portion of ground and, by varying at will the direction of travel of the belts 4, during the advancement of the assembly 1 it is possible to form two windrows A simultaneously (outside the belts 4), or one single, central windrow, substantially along the axis of symmetry C of the assembly 1, by letting the agricultural products fall in a predefined region D which in this case in fact coincides with the gap between the two belts 4, which are conveniently spaced apart.

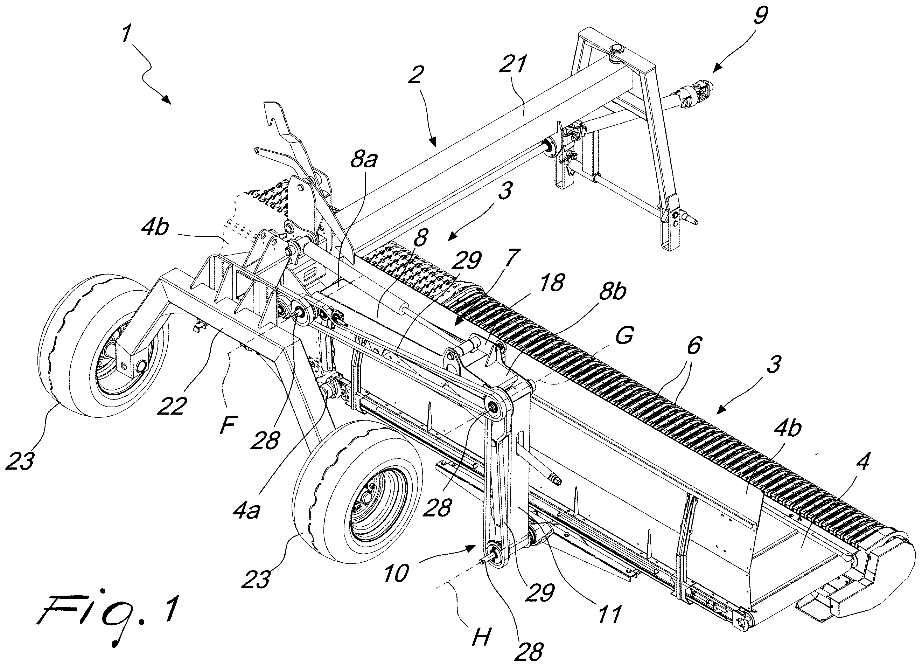

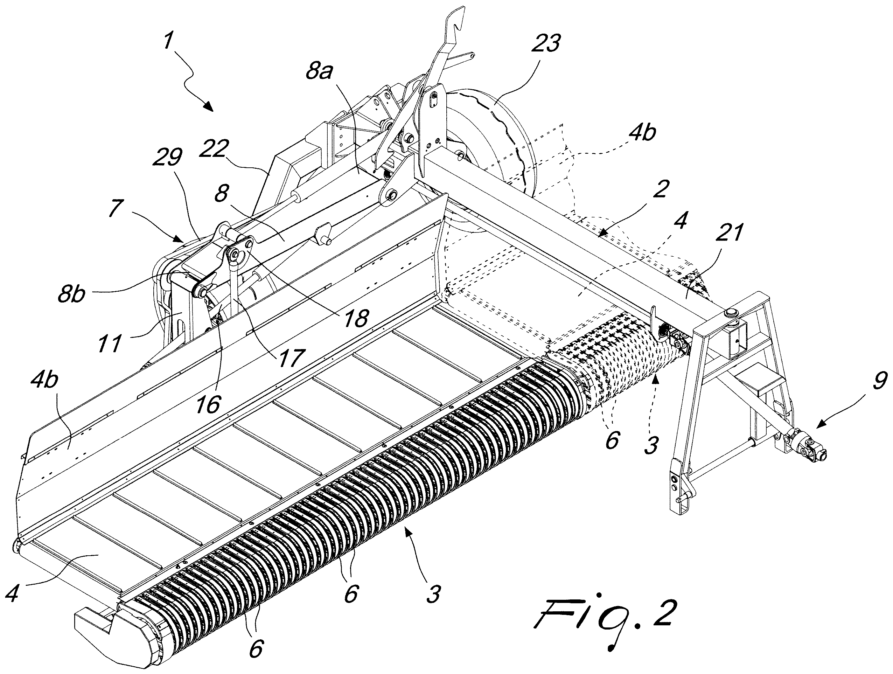

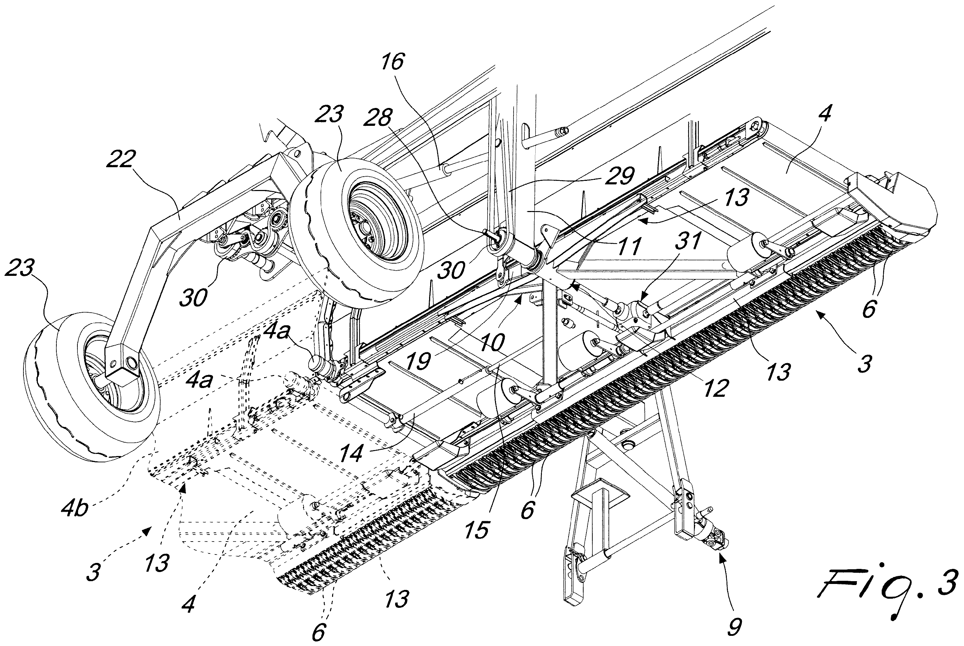

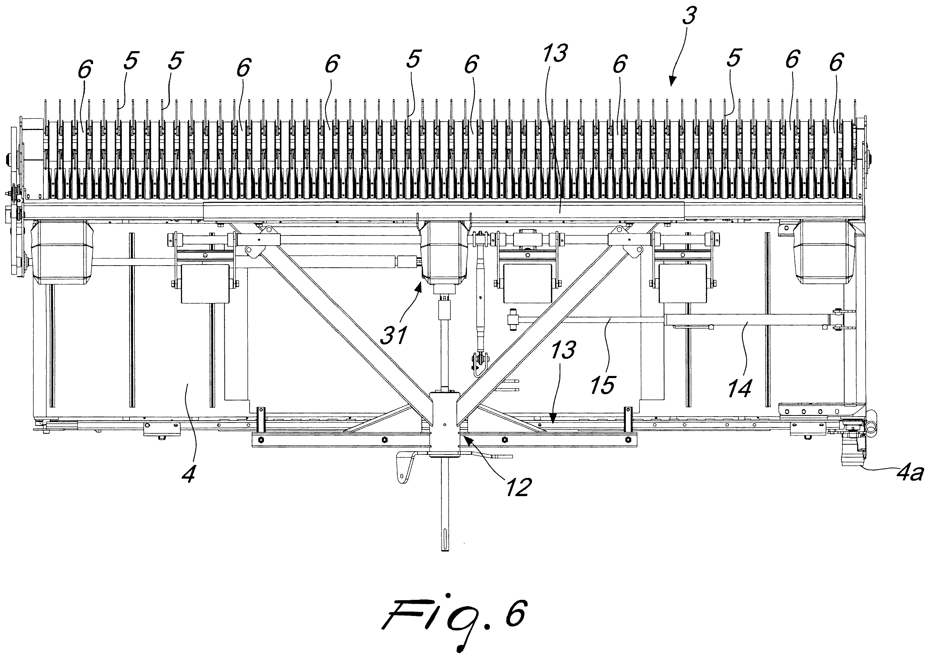

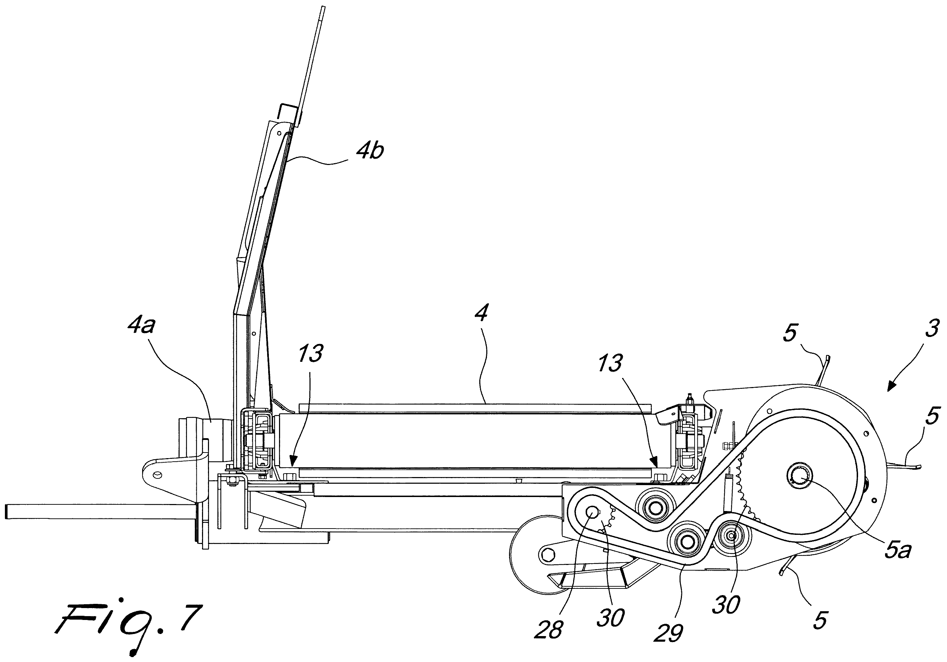

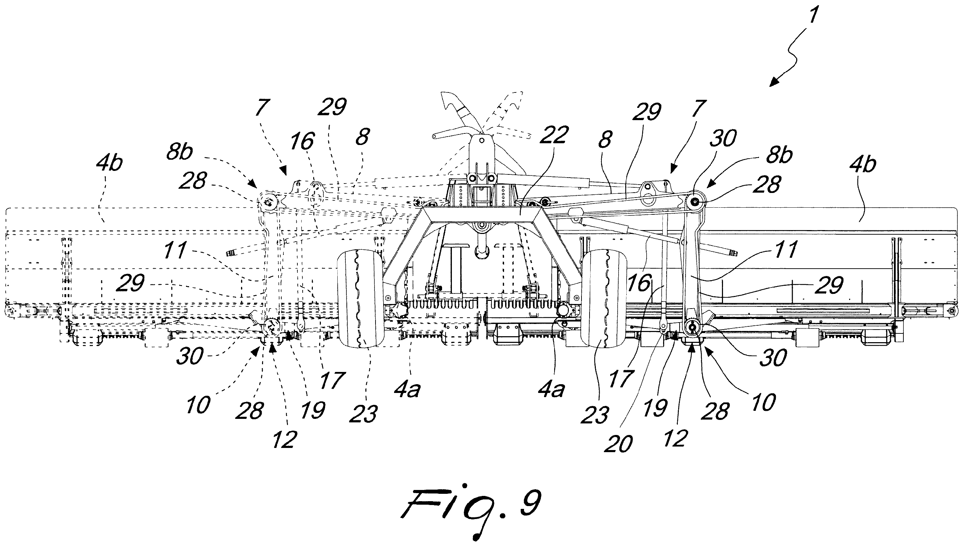

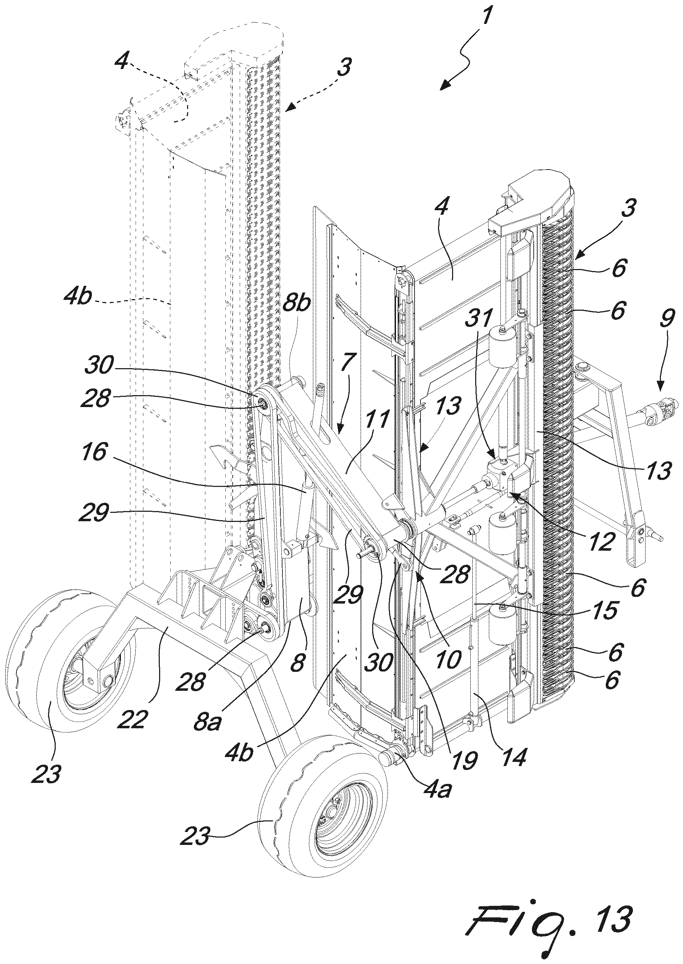

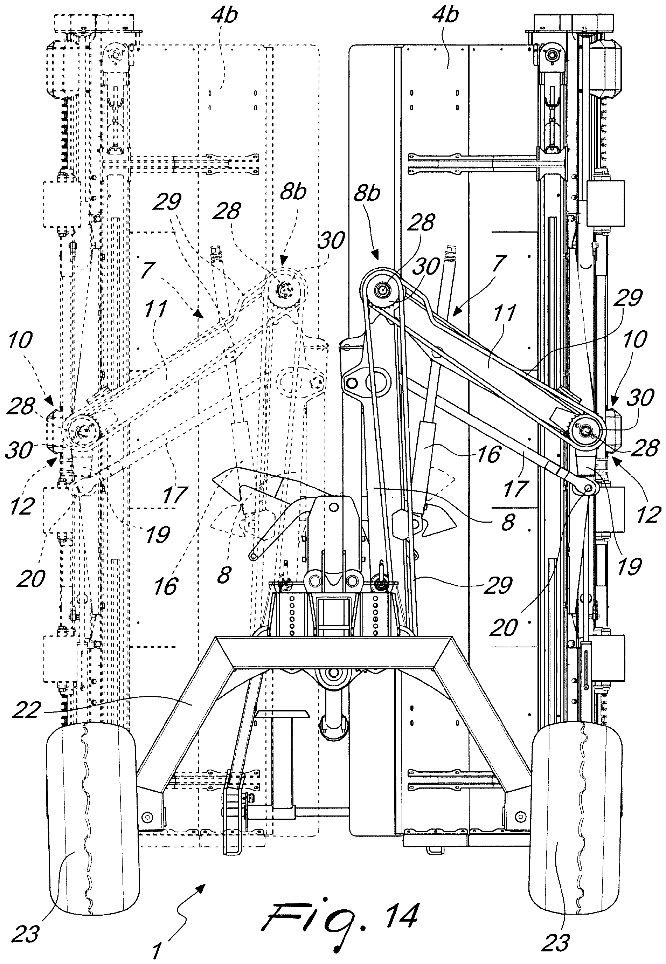

Conveniently, the assembly 1 according to the invention comprises an apparatus 7 for the movement of each belt 4 and of each row of teeth 5, from at least one first configuration, in which the assembly 1 is shown in Figures 1 to 11 and wherein each belt 4 and each row of teeth 5 are arranged substantially horizontally and proximate to the ground, for picking up, moving and depositing the agricultural products in the predefined region D, to at least one second configuration, in which each belt 4 and each row of teeth 5 are arranged substantially vertically and proximate to the carriage 2 (as can be seen in Figures 13 and 14), in order to limit the working or transport width and permit circulation on urban and suburban roads, in observance of the Italian Highway Code, and vice versa.

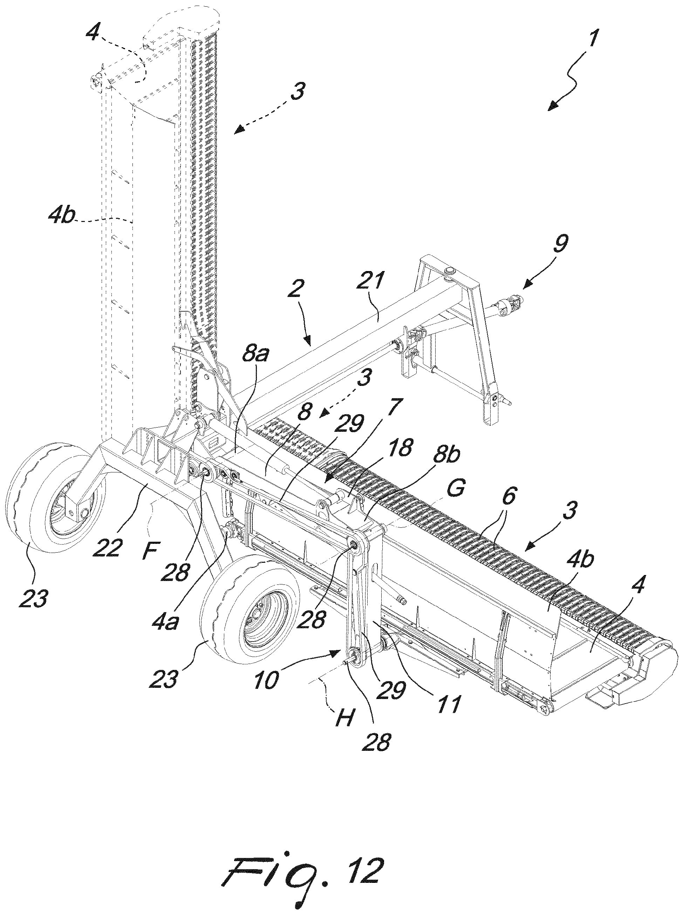

It should moreover be noted that the independent movement of each belt 4 and of each row of teeth 5 makes it possible to use the assembly 1 in further, intermediate configurations, such as for example the one in Figure 12, in which one belt 4 and one respective row of teeth 5 are arranged horizontally, while the other belt 4, with the corresponding row of teeth 5, are arranged vertically (for example, in order to move and transport grass affecting a narrower portion of ground, if this is required by the specific working conditions).

More specifically, the movement apparatus 7 comprises a pair of supporting arms 8: a first end 8a of each arm 8 is pivoted to the carriage 2 on the opposite side with respect to a power take-off 9, which is supported by the carriage 2 and can be associated, according to conventional methods, with the drive unit.

The arm 8 can thus rotate about a first rotation axis F (which is substantially parallel to the axis of symmetry C and is shown for the sake of simplicity in Figures 1 and 12 only). Moreover, a second end 8b of each arm 8, which is opposite to the first end 8a, is articulated to a respective supporting structure 10 of a corresponding belt 4 and of a corresponding row of teeth 5.

More specifically, according to the invention each supporting structure 10 comprises a profiled element 11, which is articulated to the respective arm 8 at the aforementioned second end 8b about a second rotation axis G, which is also substantially parallel to the axis of symmetry C (and to the ground): at the opposite end with respect to the arms 8, each profiled element 11 is rotatably coupled about a third rotation axis H to a reticular frame 12 for supporting a respective belt 4 and a corresponding row of teeth 5.

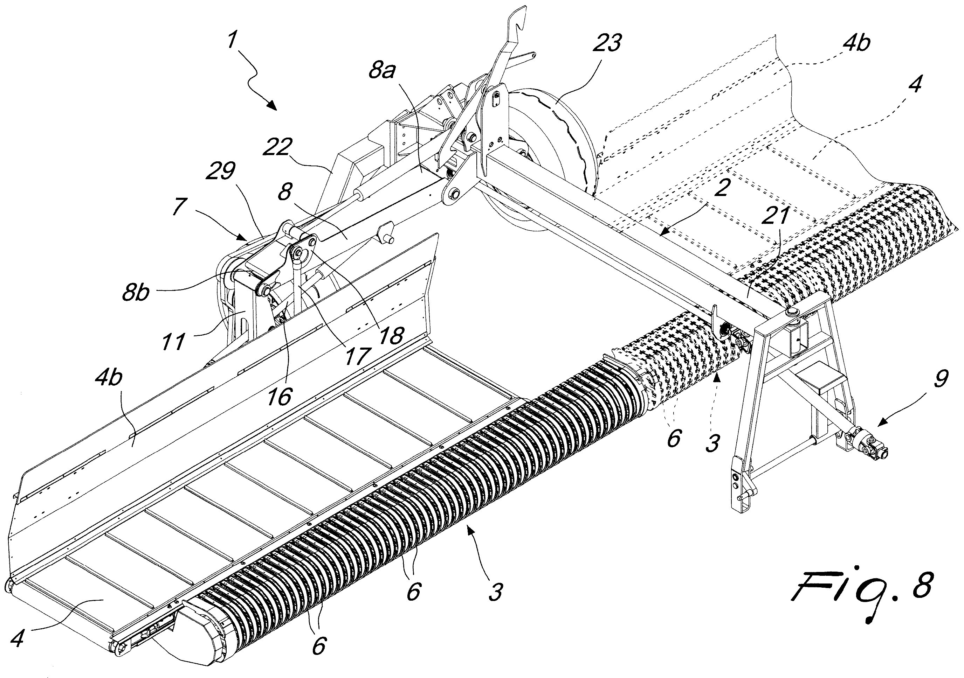

Conveniently, in order to allow the translational motion of the belt 4, with respect to the lifting and placing elements 3 (and thus with respect to the rows of teeth 5), each belt 4 is slideably coupled to a pair of mutually parallel respective guide tracks 13, which are formed by the reticular frame 12 and arranged along the predefined direction of operation B. The means of translational motion thus comprise at least one respective cylinder 14 which is rigidly coupled to each belt 4: each cylinder 14 is slideable along a respective plunger 15, which is parallel to the corresponding tracks 13 and is fixed, at the opposite end with respect to the cylinder 14, to the frame 12. In this manner, the sliding of the cylinder 14 along the plunger 15 automatically determines the travel of the belt 4 with respect to the corresponding row of teeth 5, bringing, for example, the belt 4 from an arrangement of complete alignment with such row of teeth 5 (as in Figures 1 to 7) to an arrangement in which the belt 4 is partially offset with respect to the row of teeth 5 (as in Figures 8 to 11), and vice versa.

Conveniently, the assembly 1 according to the invention comprises an elastically deformable rib 16 (for example, constituted by a spring), which is interposed between each profiled element 11 and the respective supporting arm 8: the elastic reaction of each rib 16 is directed toward the axis of symmetry C, in order to compensate for small oscillations of the supporting structure 10, of the belts 4 and of the lifting and placing elements 3.

Thus for example, when the rows of teeth 5 are in mutual contact (as in the various arrangements shown in Figures 1 to 11), the elastic reaction of the ribs 16 (the preloading of the springs for example) ensures the maintenance of such arrangement even if any irregularities of the ground traversed by the assembly 1 should force small oscillations of only one of the arms 8 with respect to the other (since they are mutually independent), which are such as to cause small rotations of the supporting structures 10 and thus of the belts 4 and of the rows of teeth 5, thus preventing the latter items from moving mutually apart, thus compromising optimal operation.

Positively, the movement apparatus 7 comprises a pair of linkages 17, each linkage 17 being articulated, with a first end portion thereof, to a respective arm 8 (and more precisely, to a plate 18 fixed to the latter), and being pivoted, with a second end portion thereof, which is opposite to the first portion, to a corresponding frame 12 (and more precisely, to a lever 19 which is integral with the latter): in this manner, the rotation of the arms 8 and of the profiled elements 11 automatically determines the counter-rotation of the rows of teeth 5, and of the belts 4, so as to enable the latter items to be arranged in the correct vertical position, when the apparatus 7 imposes the transition from the first configuration to the second configuration.

More specifically, the second end portion of each linkage 17 is pivoted to the lever 19 at a slot 20 provided in the latter, which, by determining a sort of stroke limit for the linkage 17, advantageously limits the oscillations thereof.

Conveniently, the assembly 1 according to the invention comprises a device for adjusting the extension of the carriage 2, in order to allow the selective variation of the vertical height, with respect to the ground, of the lifting and placing elements 3 and of the belts 4, which are associated with the carriage 2.

More specifically, it should be noted that in the embodiments shown in the accompanying figures the carriage 2 comprises a main bar 21, which is substantially arranged along the axis of symmetry C of the carriage 2 and to which the first ends 8a of each arm 8 are pivoted. The bar 21 can be coupled to the drive unit and has, at the opposite end, a fork 22 for supporting a pair of wheels 23: in a first possible embodiment, which is shown in Figures 1 to 14, such fork 22 is substantially constituted by a monolithic body (without the possibility of adjusting the extension, as mentioned above).

In a different embodiment, which can be seen in Figures 15 to 18, the adjustment device comprises an actuator 24 for commanding the rotation of first half-bars 22a of the fork 22 with respect to second half-bars 22b of the latter, which are articulated to the first, for the selective adjustment of the vertical height, with respect to the ground, of the lifting and placing elements 3 and of the belts 4, which are associated with the carriage 2.

Even more specifically, the actuator 24 is coupled to a transverse pivot 25, which is rotatably supported by the second half-bars 22b and is articulated, with respective tabs 26 that protrude transversely, to corresponding slats 27, which are pivoted to the first half-bars 22a: thus, when the actuator 24 commands the rotation of the pivot 25, the latter automatically moves the slats 27, which impose the rotation of the first half-bars 22a with respect to the second half-bars 22b, thus causing the transition from the arrangement in Figures 15 and 16 to the arrangement in Figures 17 and 18, or vice versa, which corresponds to a different vertical height of the bar 21, of the lifting and placing elements 3 and of the belts 4.

Advantageously, the assembly 1 according to the invention comprises elements for the mechanical transmission of the power dispensed by the drive unit, which are interposed between the aforementioned take-off 9 and the rows of teeth 5, in order to impose their rotation parallel to the predefined direction of operation B.

More specifically, the mechanical transmission elements comprise a plurality of intermediate transmission shafts 28, which are arranged along the rotation axes F, G, H and are interposed between the power take-off 9 and at least one shaft bar 5a for supporting the rows of teeth 5 (which in turn is parallel to the predefined direction of operation B of the belts 4). Such intermediate shafts 28 are mutually coupled by respective transmission joints and/or chains 29, which are wound around respective pulleys 30 supported by the intermediate shafts 28, and/or bevel gears 31.

The operation of the movement and transport assembly according to the invention is as follows.

In the first configuration, in which each belt 4 and each row of teeth 5 are arranged substantially horizontally and proximate to the ground, during advancement of the assembly 1 (which is entrained by the drive unit) is capable of picking up, moving and depositing, in the predefined region D, the previously-cut agricultural products that it progressively encounters and that are distributed randomly over the surface of interest.

Naturally, if the ground of interest is larger in size than the extension of the teeth 5 and of the belts 4, it is sufficient to perform multiple passes (along parallel paths of advancement E for example) in order to collect and move the entire mass of grass, thus forming correspondingly a plurality of parallel windrows A.

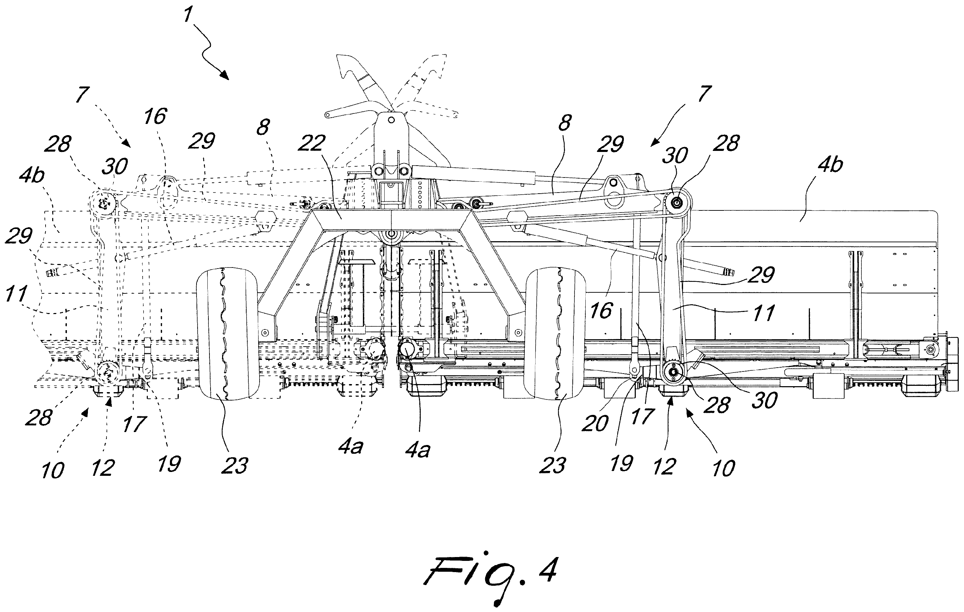

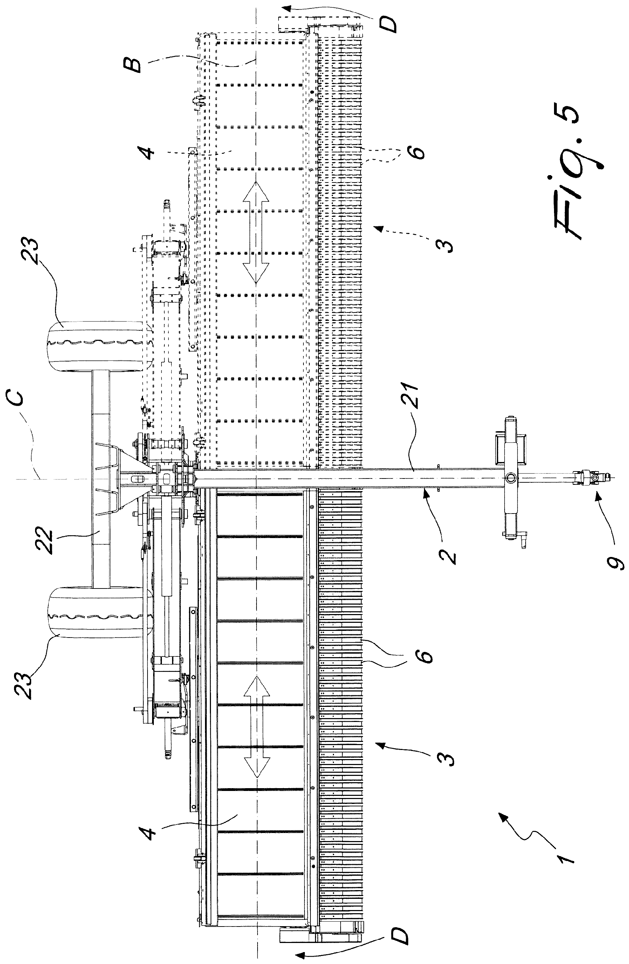

As partially anticipated in the previous paragraphs, by varying the position and the direction of travel of the belts 4 it is possible to modify, as a consequence, the placement of the windrow A being formed, or the windrows A, with respect to the assembly 1 and to the path E travelled by it. For example, by keeping both the belts 4 and the two rows of teeth 5 in mutual contact (such as for example in Figures 4 or 5, or in the schematic diagram in Figure 19), and by imposing opposite directions of travel on the belts 4 (i.e. directed outward from the assembly 1) it is possible to form two windrows A on the sides of the assembly 1, which are constituted by the entire mass of grass distributed along the portion of surface progressively passed over by the assembly 1 and by the drive unit.

Alternatively, by imposing the same direction of travel on the belts 4, as in Figure 20, it is possible to form a single windrow A on one selected side of the assembly 1.

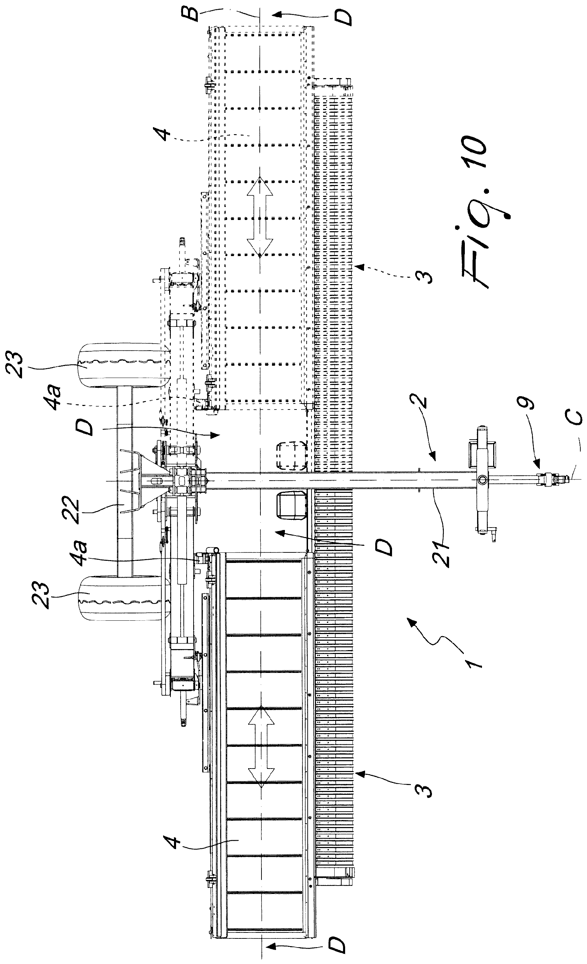

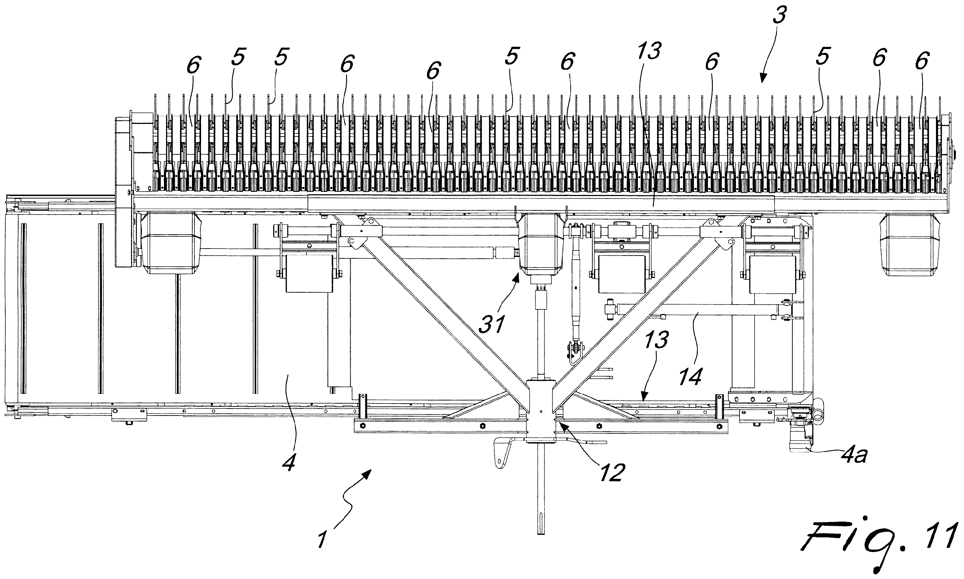

From such arrangement, thanks to the possibility of translational motion of the belt 4 with respect to the lifting and placing elements 3, it is possible to transition to a different arrangement (see for example Figures 10 and 11, and the schematic diagram in Figure 21), in which, while keeping the lifting and placing elements 3 fixed, each belt 4 is partially offset with respect to the respective row of teeth 5. By imposing a direction of travel on each belt 4 which is opposite to the previous one, it is thus possible to form, during the advancement of the assembly 1, a single, substantially "central", windrow A located along the axis of symmetry C and the path of advancement E.

Such central windrow A, differently from what occurs in conventional assemblies, is formed by the entire mass of grass distributed over the portion of surface, since by keeping the teeth 5 in contact (again, as can clearly be seen in Figure 21), it is possible to pick up the grass found along the path of advancement E and let it fall behind them (through the gap between the belts 4, which coincides with the predefined region D), whereas the remaining grass is picked up by the teeth 5 and moved by the belts 4, which accumulate it on the other grass, thus forming the windrow A.

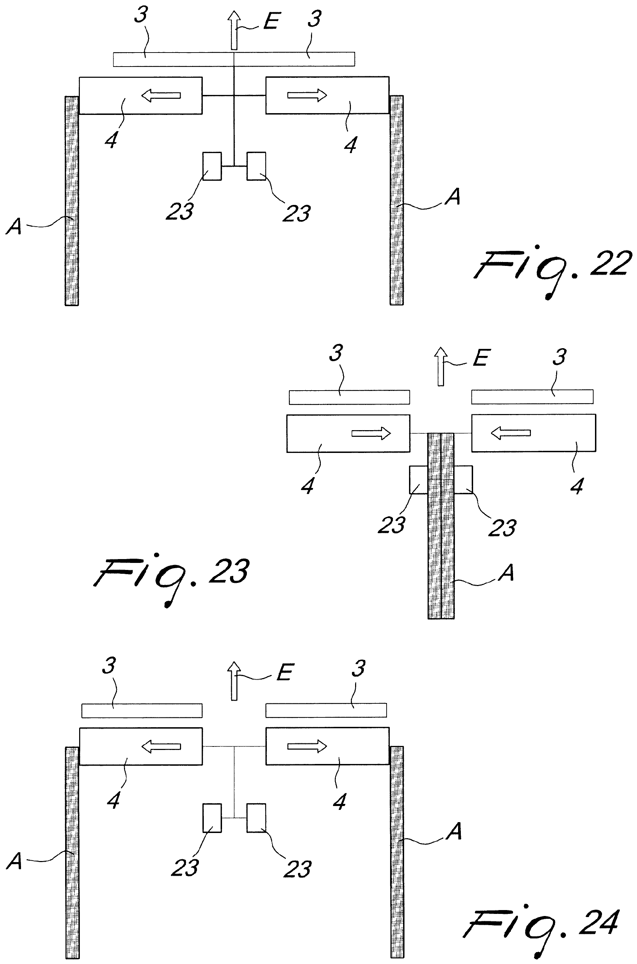

Naturally, by keeping the arrangement described in the previous paragraph, it is possible to invert the directions of rotation of the two belts 4, in order to deposit the grass on the sides of the assembly A, thus forming two parallel windrows A, as in Figure 22.

It should be noted moreover that the possibility is not excluded of also providing the teeth 5 with an additional possibility for translational motion, along the predefined direction B, integrally with the belts 4, in order to be capable of defining further operation arrangements (some of which are schematically illustrated in Figures 23 and 24), if required by the specific application requirements.

As has been shown, the assembly 1 can easily be transported on urban or suburban roads, since its width (obviously extended in the first configuration of operation, in order to be capable of collecting a larger quantity of grass with each pass over the agricultural land) can be appreciably reduced (and maintained within the legal limits), by being brought into the second configuration (as in Figures 13 and 14) thanks to the movement apparatus 7 (which is arranged to the rear of the belts 4 and of the teeth 5, so as not to interfere with the agricultural products in motion).

It must moreover be noted that the use of separate movement devices 7, for each belt 4 and row of teeth 5, which are capable of supporting them and rotating them mutually independently, makes it possible to best follow the lie of the land, even if it is uneven, and to tolerate any irregularities in the terrain, thus making the assembly 1 according to the invention more versatile than conventional assemblies.

The high versatility of the assembly 1 is moreover supported by the possibility of being provided with a device for adjusting the extension of the carriage 2: the variation of the vertical height, with respect to the ground, of the lifting and placing elements 3 (the teeth 5) and of the belts 4, in fact enables an optimal adaptation to the different types of agricultural land that the assembly 1 can be called on to cover.

Finally, it must be noted that the use of the supporting arms 8 (and of the profiled elements 11) also offers an ideal support for the mechanical transmission elements and more precisely for the intermediate transmission shafts 28, which are arranged along the rotation axes F, G, H about which the arms 8, and the profiled elements 11, are pivoted, thus making it possible to obtain an embodiment that is simple and compact.

In practice it has been found that the movement and transport assembly according to the invention fully achieves the set aim, since the use of means of translational motion of the belt, with respect to the elements for lifting and placing the previously-cut agricultural products, makes it possible to vary the placement of the predefined region for the deposit and accumulation of the entire mass of previously-cut agricultural products.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An assembly for the movement and transport of agricultural products, of the type of grass, hay, forage, and the like, previously cut and distributed randomly on a surface of the type of agricultural land and the like, comprising
a carriage (2) that can be coupled to a drive unit, with said carriage (2) elements being associated for lifting and placing (3) agricultural products on at least one conveyor belt (4), which is facing and proximate to said lifting and placing elements (3) and mobile along a predefined direction of operation (B), which is substantially transverse to the axis of symmetry (C) of said carriage (2), for the movement and deposit of the agricultural products in a predefined region (D) adjacent to one of the two margins of the belt (4),
means of translational motion of said belt (4), with respect to said lifting and placing elements (3), along said predefined direction (B), for the selective variation of the placement of the predefined region (D) for the deposit and accumulation of the entire mass of previously-cut agricultural products, said lifting and placing elements (3) comprising at least one row of rotating aligned teeth (5), parallel to said predefined direction of operation (B), for the lifting of the previously-cut agricultural products and their delivery on said belt (4), and comprising at least two of said conveyor belts (4) and at least two of said lifting and placing elements (3), which are mutually opposite with respect to said axis of symmetry (C), each one of said belts (4) facing and being proximate to at least one respective row of rotating aligned teeth (5) of a respective said lifting and placing element (3), parallel to said predefined direction of operation (B),
the assembly comprising an apparatus for the movement (7) of each one of said belts (4) and of said rows of teeth (5), from at least one first configuration, in which each one of said belts (4) and of said rows of teeth (5) is arranged substantially horizontally and proximate to the ground, for the lifting, movement, and deposit in the predefined region (D) of the agricultural products, to at least one second configuration, in which each one of said belts (4) and of said rows of teeth (5) is arranged substantially vertically and proximate to said carriage (2), for limiting the working or transport width, and vice versa,
**characterised in that** said movement apparatus (7) comprises a pair of supporting arms (8), a first end (8a) of each one of said arms (8) being pivoted to said carriage (2), about a first rotation axis (F), on the opposite side with respect to a power take-off (9), which is supported by said carriage (2) and can be associated with the drive unit, a second end (8b) of each one of said arms (8), which is opposite to said first end (8a), being articulated to a respective supporting structure (10) of said corresponding belt (4) and of said corresponding row of teeth (5),
wherein each one of said supporting structures (10) comprises a profiled element (11), which is articulated to said respective arm (8) at said second end (8b) about a second rotation axis (G), which is substantially parallel to said axis of symmetry (C), at the opposite end with respect to said arms (8) each profiled element (11) being rotatably coupled to a reticular frame (12) for supporting said respective belt (4) and said corresponding row of teeth (5), about a third rotation axis (H).

2. The assembly according to claim 1, **characterized in that** each one of said belts (4) is slideably coupled to a pair of mutually parallel respective guide tracks (13), formed by said reticular frame (12) and arranged along said predefined direction of operation (B), said means of translational motion comprising at least one respective cylinder (14) which is rigidly coupled to each one of said belts (4), each one of said cylinders (14) being slideable along a respective plunger (15) which is parallel to said corresponding tracks (13) and is fixed, at the opposite end with respect to said cylinder (14), to said frame (12).

3. The assembly according to claim 1 or 2, **characterized in that** it comprises an elastically deformable rib (16), which is interposed between each one of said profiled elements (11) and said respective supporting arm (8), the elastic reaction of said rib (16) being directed toward said axis of symmetry (C), for the compensation of small oscillations of said supporting structure (10), of said belts (4) and of said lifting and placing elements (3).

4. The assembly according to claims 1-3, **characterized in that** said movement apparatus (7) comprises a pair of linkages (17), each one of said linkages (17) being articulated, with a first end portion thereof, to said respective arm (8), and being pivoted, with a second end portion thereof, at the other end opposite to said first portion, to said corresponding frame (12), for the automatic counter-rotation of said rows of teeth (5), and of said belts (4), as a consequence of the rotation of said arms (8) and of said profiled elements (11).

5. The assembly according to one or more of the preceding claims, **characterized in that** it comprises a device for adjusting the extension of said carriage (2), for the selective variation of the vertical height, with respect to the ground, of said lifting and placing elements (3) and of said belts (4), which are associated with the carriage (2).

6. The assembly according to claim 5, **characterized in that** said carriage (2) comprises a main bar (21), which can be coupled to the drive unit and has, at the opposite end, a fork (22) for supporting a pair of wheels (23), said adjustment device comprising an actuator (24) for commanding the rotation of first half-bars (22a) of said fork (22) with respect to second half-bars (22b) of said fork (22), which are articulated to said first half-bars (22a), for the selective variation of the vertical height, with respect to the ground, of said lifting and placing elements (3) and of said belts (4), which are associated with said carriage (2).

7. The assembly according to claims 1-6, **characterized in that** it comprises elements for the mechanical transmission of the power dispensed by the drive unit, which are interposed between said power take-off (9) and said rows of said teeth (5), for their rotation parallel to said predefined direction of operation (B).

8. The assembly according to claim 7, **characterized in that** said mechanical transmission elements comprise a plurality of intermediate transmission shafts (28), which are arranged along said rotation axes (F, G, H) and are interposed between said power take-off (9) and at least one shaft (5a) for supporting said rows of said teeth (5), said intermediate shafts (28) being mutually coupled by respective transmission joints and/or chains (29), which are wound around respective pulleys (30) supported by said intermediate shafts (28), and/or bevel gears (31).

## Patentansprüche

1. Eine Anordnung zum Bewegen und Tranportieren von landwirtschaflichen Produkten, von der Art von Gras, Heu, Futter und dergleichen, die zuvor geschnitten und zufällig auf einer Oberfläche von der Art einer landwirtschaftlichen Fläche und dergleichen verteilt wurden, Folgendes umfassend:
ein Laufwerk (2), dass mit einer Antriebseinheit gekoppelt werden kann, wobei mit dem Laufwerk (2) Elemente (3) zum Anheben und Positionieren landwirtschaftlicher Produkte auf mindestens ein Förderband (4) verbunden sind, welches den Anhebungs- und Positionierelementen (3) zugewandt ist und in ihrer Nähe liegt und entlang einer vordefinierten Arbeitsrichtung (B) beweglich ist, die im Wesentlichen quer zur Symmetrieachse (C) des Laufwerks (2) ist, zum Zwecke der Bewegung und des Ablegens der landwirtschaftlichen Produkte in einem vordefinierten Bereich (D), der an einen der zwei Ränder des Bandes (4) angrenzt,
Mittel zur Translationsbewegung des Bandes (4), im Verhältnis zu den Anhebe- und Positionierelementen (3), entlang der vordefinierten Richtung (B), zur selektiven Veränderung der Positionierung des vordefinierten Bereichs (D), zum Ablegen und Ansammeln der gesamten Masse zuvor geschnittener landwirtschaftlicher Produkte, wobei die Anhebe- und Positionierelemente (3), mindestens eine Reihe sich drehender ausgerichteter Zähne (5), parallel zu der vordefinierten Arbeitsrichtung (B), zum Anheben der zuvor geschnittenen landwirtschaftlichen Produkte und ihres Ablegens auf dem Band (4) umfassen, und mindestens zwei der Förderbänder (4) und mindestens zwei der Anhebe- und Positionierelemente (3) umfassen, die einander mit Bezug auf die Symmetrieachse (C) gegenüberliegen, wobei jedes der Bänder (4) mindestens einer entsprechenden Reihe sich drehender ausgerichteter Zähne (5) des jeweiligen Anhebe- und Positionierelements (3), parallel zu der vordefinierten Arbeitsrichtung (B), zugewandt ist und in ihrer Nähe liegt,
wobei die Anordnung eine Vorrichtung für die Bewegung (7) jedes der Bänder (4) und der Reihen von Zähnen (5), aus mindestens einer ersten Anordnung, in welcher jedes der Bänder (4) und jede der Reihen von Zähnen (5) im Wesentlichen horizontal und nahe dem Boden angeordnet ist zum Anheben, Bewegen und Ablegen der landwirtschaftlichen Produkte im vordefinierten Bereich (D), in mindestens eine zweite Anordnung umfasst, in welcher jedes der Bänder (4) und jede der Reihen von Zähnen (5) im Wesentlichen vertikal und nahe dem Laufwerk (2) angeordnet ist, um die Arbeits- oder Transportbreite zu begrenzen und umgekehrt,
**dadurch gekennzeichnet, dass** die Bewegungsvorrichtung (7) ein Paar von Tragarmen (8) umfasst, wobei ein erstes Ende (8a) jedes der Arme (8) drehgelenkig um eine erste Drehachse (F) mit dem Laufwerk (2) auf der Seite, die einem Zapfwellenabtrieb (9) gegenüberliegt, verbunden ist, welcher von Laufwerk (2) getragen wird und mit der Antriebseinheit verbunden sein kann, wobei ein zweites Ende (8b) jedes der Arme (8) das dem ersten Ende (8a) gegenüberliegt, gelenkig mit einer entsprechenden tragenden Struktur (10) des jeweiligen Bandes (4) und der jeweiligen Reihe von Zähnen (5) verbunden ist,
wobei jede der tragenden Strukturen (10) ein profiliertes Element (11) umfasst, welches um eine zweite Drehachse (G), welche im Wesentlichen parallel zu der Symmetrieachse (C) ist, gelenkig mit dem entsprechenden Arm (8) an den zweiten Ende (8b) verbunden ist, wobei an dem Ende, das den Armen (8) gegenüberliegt, jedes profilierte Element (11) drehbar um eine dritte Drehachse (H) mit einem Gitterrahmen (12) zum Tragen des jeweiligen Bandes (4) und der entsprechenden Reihe von Zähnen (5) gekoppelt ist.

2. Die Anordnung gemäß Anspruch 1, **dadurch gekennzeichnet, dass** jedes der Bänder (4) verschiebbar mit einem Paar zueinander paralleler entsprechender Führungsbahnen (13) gekoppelt ist, die von dem Gitterrahmen (12) gebildet werden und entlang der vordefinierten Arbeitsrichtung (B) angeordnet sind, wobei die Mittel zur Translationsbewegung mindestens einen entsprechenden Zylinder (14) umfassen, der starr mit jeweils einem der Bänder (4) gekoppelt ist, wobei jeder der Zylinder (14) entlang einem entsprechenden Plunger (15) verschiebbar ist, welcher zu den jeweiligen Bahnen (13) parallel und an dem gegenüberliegenden Ende mit Bezug auf den Zylinder (14) an dem Rahmen (12) befestigt ist.

3. Die Anordnung gemäß Anspruch 1 oder 2, **dadurch gekennzeichnet, dass** sie eine elastisch verformbare Rippe (16) umfasst, die zwischen jedem der profilierten Elemente (11) und dem jeweiligen tragenden Arm (8) angeordnet ist, wobei die elastische Reaktion der Rippe (16) zu der Symmetrieachse (10) hin gerichtet ist, zum Zwecke der Kompensation kleiner Schwingungen der tragenden Struktur (10) der Bänder (4) und der Anhebe- und Positionierelemente (3).

4. Die Anordnung gemäß den Ansprüche 1-3, **dadurch gekennzeichnet, dass** die Bewegungsvorrichtung (7) ein Paar von Verbindungselementen (17) umfasst, wobei jedes der Verbindungselemente (17) mit einem ersten Endabschnitt desselben gelenkig mit dem entsprechenden Arm (8) verbunden und mit einem zweiten Endabschnitt desselben an dem anderen Ende, das dem ersten Abschnitt gegenüberliegt, drehgelenkig mit dem entsprechenden Rahmen (12) verbunden ist, zum Zwecke der automatischen Gegendrehung der Reihen von Zähnen (5) und der Bänder (4) in Folge der Drehung der Arme (8) und der profilierten Elemente (11).

5. Die Anordnung gemäß einem oder mehreren der obigen Ansprüche, **dadurch gekennzeichnet, dass** sie eine Vorrichtung zur Anpassung der Ausdehnung des Laufwerks (2) umfasst zum Zwecke der selektiven Veränderung der vertikalen Höhe mit Bezug auf den Boden der Anhebe- und Positionierelemente (3) und der Bänder (4) die mit dem Laufwerk (2) verbunden sind.

6. Die Anordnung gemäß Anspruch 5, **dadurch gekennzeichnet, dass** das Laufwerk (2) eine Hauptstange (21) umfasst, die mit der Antriebseinheit gekoppelt werden kann und am gegenüberliegenden Ende eine Gabel (22) zum Tragen eines Paares von Rädern (23) hat, wobei die Anpassungsvorrichtung ein Antriebselement (24) umfasst, um die Drehung erster Stangenhälften (22a) der Gabel (22) im Verhältnis zu zweiten Stangenhälften (22b) der Gabel (22) auszulösen, die gelenkig mit den ersten Stangenhälften (22a) verbunden sind zur selektiven Veränderung der vertikalen Höhe mit Bezug auf den Boden der Anhebe- und Positionierelemente (3) und der Bänder (4), die mit dem Laufwerk (2) verbunden sind.

7. Die Anordnung gemäß den Ansprüche 1-6, **dadurch gekennzeichnet, dass** sie Elemente für die mechanische Übertragung der Kraft umfasst, die von der Antriebseinheit abgegeben wird, welche zwischen dem Zapfwellenantrieb (9) und den Reihen der Zähne (5) angeordnet sind, zum Zwecke ihrer Drehung parallel zu der vordefinierten Arbeitsrichtung (B).

8. Die Anordnung gemäß Anspruch 7, **dadurch gekennzeichnet, dass** die mechanischen Übertragungselemente eine Vielzahl von intermediärer Vorgelegewellen (28) umfassen, die entlang den Drehachsen (F, G, H) angeordnet und zwischen dem Zapfwellenantrieb (9) und mindestens einer Welle (5a) zum Tragen der Reihen der Zähne (5) zwischengeschaltet sind, wobei die intermediären Wellen (28) durch entsprechende Übertragungsgelenke und/oder -ketten (29) miteinander gekoppelt sind, die um entsprechende Riemenscheiben (30) herum gewunden sind, welche von den intermediären Wellen (28) getragen sind und/oder Kegelrädern (31).

## Revendications

1. Ensemble pour le déplacement et le transport de produits agricoles, du type herbe, foin, fourrage et analogue, précédemment coupés et répartis de manière aléatoire sur une surface du type terre agricole et analogue, comportant
un chariot (2) qui peut être accouplé à une unité d'entraînement, des éléments dudit chariot (2) étant associés pour lever et placer (3) des produits agricoles sur au moins une bande de convoyage (4), qui fait face auxdits éléments de levage et de placement (3) et est à proximité de ceux-ci et mobile le long d'une direction de fonctionnement (B) prédéfinie, qui est sensiblement transversale à l'axe de symétrie (C) dudit chariot (2), pour le déplacement et le dépôt des produits agricoles dans une zone (D) prédéfinie adjacente à l'une des deux marges de la bande (4),
des moyens de mouvement de translation de ladite bande (4), par rapport auxdits éléments de levage et de placement (3), le long de ladite direction (B) prédéfinie, pour la variation sélective du placement de la zone (D) prédéfinie pour le dépôt et l'accumulation de la masse complète de produits agricoles précédemment coupés, lesdits éléments de levage et de placement (3) comportant au moins une rangée de dents rotatives alignées (5), parallèles à ladite direction de fonctionnement (B) prédéfinie, pour le levage des produits agricoles précédemment coupés et leur cheminement sur ladite bande (4), et comportant au moins deux desdites bandes de convoyage (4) et au moins deux desdits éléments de levage et de placement (3), qui sont mutuellement opposés par rapport audit axe de symétrie (C), chacune desdites bandes (4) faisant face à au moins une rangée respective de dents rotatives alignées (5) d'un élément de levage et de placement (3) respectif et étant à proximité de celle-ci, parallèlement à ladite direction de fonctionnement (B) prédéfinie,
l'ensemble comportant un appareil pour le déplacement (7) de chacune desdites bandes (4) et desdites rangées de dents (5), depuis au moins une première configuration, dans laquelle chacune desdites bandes (4) et desdites rangées de dents (5) est agencée de manière sensiblement horizontale et à proximité du sol, pour le levage, le déplacement et le dépôt dans la zone (D) prédéfinie des produits agricoles, jusqu'à au moins une seconde configuration, dans laquelle chacune desdites bandes (4) et desdites rangées de dents (5) est agencée de manière sensiblement verticale et à proximité dudit chariot (2), pour limiter la largeur de travail ou de transport, et vice versa,
**caractérisé en ce que** ledit appareil de déplacement (7) comporte une paire de bras de support (8), une première extrémité (8a) de chacun desdits bras (8) pivotant sur ledit chariot (2), autour d'un premier axe de rotation (F), sur le côté opposé par rapport à une prise de force (9), qui est supportée par ledit chariot (2) et peut être associée à l'unité d'entraînement, une seconde extrémité (8b) de chacun desdits bras (8), qui est opposée à ladite première extrémité (8a), étant articulée à une structure de support (10) respective de ladite bande (4) correspondante et de ladite rangée correspondante de dents (5),
dans lequel chacune desdites structures de support (10) comporte un élément profilé (11), qui est articulé audit bras (8) respectif à ladite seconde extrémité (8b) autour d'un deuxième axe de rotation (G), qui est sensiblement parallèle audit axe de symétrie (C), à l'extrémité opposée par rapport auxdits bras (8), chaque élément profilé (11) étant couplé en rotation à un bâti réticulaire (12) pour supporter ladite bande (4) respective et ladite rangée correspondante de dents (5), autour d'un troisième axe de rotation (H).

2. Ensemble selon la revendication 1, **caractérisé en ce que** chacune desdites bandes (4) est couplée de manière coulissante à une paire de glissières de guidage (13) respectives, mutuellement parallèles, formées par ledit bâti réticulaire (12) et agencées le long de ladite direction de fonctionnement (B) prédéfinie, lesdits moyens de mouvement de translation comportant au moins un vérin (14) respectif qui est rigidement couplé à chacune desdites bandes (4), chacun desdits vérins (14) pouvant glisser le long d'un piston (15) respectif qui est parallèle auxdites glissières (13) correspondantes et est fixé, à l'extrémité opposée par rapport audit vérin (14), audit bâti (12).

3. Ensemble selon la revendication 1 ou 2, **caractérisé en ce qu'**il comporte une nervure élastiquement déformable (16), qui est intercalée entre chacun desdits éléments profilés (11) et ledit bras de support (8) respectif, la réaction élastique de la nervure (16) étant dirigée vers ledit axe de symétrie (C), pour la compensation de petites oscillations de ladite structure de support (10), desdites bandes (4) et desdits éléments de levage et de placement (3).

4. Ensemble selon les revendications 1 à 3, **caractérisé en ce que** ledit appareil de déplacement (7) comporte une paire de tringleries (17), chacune desdites tringleries (17) étant articulée, avec une première partie d'extrémité de celle-ci, audit bras (8) respectif, et pivotant, avec une seconde partie d'extrémité de celle-ci, à l'autre extrémité opposée à ladite première partie, audit bâti (12) correspondant, pour la rotation automatique en sens inverse desdites rangées de dents (5), et desdites bandes (4), en conséquence de la rotation desdits bras (8) et desdits éléments profilés (11).

5. Ensemble selon une ou plusieurs des revendications précédentes, **caractérisé en ce qu'**il comporte un dispositif pour régler l'extension dudit chariot (2), pour la variation sélective de la hauteur verticale, par rapport au sol, desdits éléments de levage et de placement (3) et desdites bandes (4), qui sont associés au chariot (2).

6. Ensemble selon la revendication 5, **caractérisé en ce que** ledit chariot (2) comporte une barre principale (21), qui peut être accouplée à l'unité d'entraînement et a, à l'extrémité opposée, une fourche (22) pour supporter une paire de roues (23), ledit dispositif de réglage comportant un actionneur (24) pour commander la rotation de premières demies barres (22a) de ladite fourche (22) par rapport à des secondes demies barres (22b) de ladite fourche (22), qui sont articulées auxdites premières demies barres (22a), pour la variation sélective de la hauteur verticale, par rapport au sol, desdits éléments de levage et de placement (3) et desdites bandes (4), qui sont associés audit chariot (2).

7. Ensemble selon les revendications 1 à 6, **caractérisé en ce qu'**il comporte des éléments pour la transmission mécanique de la puissance fournie par l'unité d'entraînement, qui sont intercalés entre ladite prise de force (9) et lesdites rangées desdites dents (5), pour leur rotation parallèle à ladite direction de fonctionnement (B) prédéfinie.

8. Ensemble selon la revendication 7, **caractérisé en ce que** lesdits éléments de transmission mécanique comportent une pluralité d'arbres de transmission intermédiaires (28), qui sont agencés le long desdits axes de rotation (F, G, H) et sont intercalés entre ladite prise de force (9) et au moins un arbre (5a) pour supporter lesdites rangées desdites dents (5), lesdits arbres intermédiaires (28) étant mutuellement accouplés par des joints de transmission respectifs et/ou des chaînes respectives (29), qui sont enroulées autour de poulies (30) respectives supportées par lesdits arbres intermédiaires (28), et/ou des engrenages coniques (31).
